# DEMANDE DE BREVET EUROPEEN

(11) **EP 1 286 570 A1**
(43) Date de publication de la demande: **26.02.2003**
(21) Numéro de dépôt: 01402198.4
(22) Date de dépôt: 20.08.2001
(51) Int. Cl.: H05B 37/02

(54) **Dispositif de commande perfectionnée d'une alimentation électrique, notamment pour candélabres d'éclairage public**

(71) Demandeur: Invicom, 75017 Paris (FR)
(72) Inventeur: Gainville, Maurice, 76370 Saint Martin en Campagne (FR); Leroy, Sébastien, 76200 Dieppe (FR)
(74) Mandataire: Plaçais, Jean-Yves

(57) **Abrégé**

L'invention concerne la régulation de l'alimentation électrique de candélabres d'éclairage public, lesquels sont équipés d'un dispositif de commande comprenant une mémoire préenregistrée (MEM1), dans laquelle sont stockées des données relatives à une position géographique du candélabre et à une durée de nuit pour chaque nuit de l'année. Entre deux instants de déclenchement et d'interruption de l'alimentation, le dispositif compte une durée de nuit qu'il compare aux données préenregistrées, ce qui lui permet de se caler sur le jour civil en cour et de déclencher et/ou interrompre la régulation à heures civiles prédéterminées.

## Description

La présente invention concerne une commande d'alimentation électrique, notamment pour un éclairage en grande diffusion.

Un dispositif pour une telle commande d'un circuit utilisateur comprend un module de traitement muni d'une entrée pour recevoir des indications d'instants de transition jour/nuit et nuit/jour. A partir de ces indications, ce module met en forme un signal de commande de l'alimentation électrique du circuit utilisateur.

Des circuits utilisateurs en grande diffusion, tels que l'éclairage urbain, sont déclenchés à partir du coucher du soleil (crépuscule) et interrompus en fin de nuit (aube). L'alimentation électrique fournie est en principe constante entre le crépuscule et l'aube. Or il est souhaité, notamment dans des régions urbaines telles que des quartiers résidentiels, une réduction de cette alimentation à partir d'une certaine heure de la nuit, typiquement à partir de vingt-deux ou vingt-trois heures.

A cette fin, des dispositifs de commande connus comportent un module de régulation, tel qu'un ballast comprenant une inductance à monter en série avec une lampe de candélabre d'éclairage public. Lorsque le module de régulation est activé, la puissance d'alimentation électrique de la lampe diminue, entraînant une réduction de l'éclairage qu'elle produit.

De tels dispositifs comprennent en outre une entrée par laquelle ils reçoivent un signal comportant l'heure civile en cours, en vue d'activer ou de désactiver le module de régulation à une heure civile fixe, prédéterminée, par exemple à vingt-deux ou vingt-trois heures.

De tels dispositifs, quoique prometteurs, présentent des limites rédhibitoires dans leur application pratique, notamment en terme de coût d'installation puisqu'il est nécessaire de prévoir, avec la ligne principale d'alimentation, une ligne supplémentaire pour véhiculer le signal comportant l'heure civile. Comme les câbles d'alimentation électrique des candélabres sont généralement enterrés, il est alors nécessaire de creuser des tranchées entre les candélabres pour installer cette ligne supplémentaire. Par ailleurs, la ramification en réseau d'un éclairage public, avec les candélabres montés généralement en série, ne permet qu'une sélectivité restreinte des régions où la régulation est souhaitée.

La présente invention vient améliorer la situation.

Elle propose à cet effet un dispositif de commande comportant en outre une mémoire préenregistrée dans laquelle sont stockées des données relatives à des heures civiles de lever et/ou de coucher du soleil, ainsi que des données de durées liées aux périodes jour/nuit, pour une partie au moins des jours de l'année.

Selon une première caractéristique, le module de traitement est agencé pour :
a) calculer, à l'aide d'une base de temps, une durée par différence des instants de transition,
b) consulter la mémoire préenregistrée en vue de comparer la durée calculée aux durées préenregistrées, et
c) déduire de cette comparaison une estimation de l'heure civile.

Ainsi, le dispositif selon l'invention peut commander l'alimentation sensiblement en fonction de l'heure civile en cours, sans toutefois recevoir un signal qui comporterait une telle donnée.

On entend par "base de temps" un moyen quelconque, tel qu'une horloge interne munie d'un quartz, permettant de compter des intervalles de temps réguliers.

Avantageusement, la mémoire préenregistrée comprend en outre des données relatives à une position géographique du circuit utilisateur, de préférence en longitude et encore plus préférentiellement en longitude et en latitude, de sorte que le module de traitement puisse corriger l'estimation de l'heure civile en tenant compte de cette position géographique.

Dans un premier mode de réalisation, la mémoire préenregistrée est organisée en une matrice de correspondance des données avec des jours de l'année.

Dans un second mode de réalisation, la mémoire préenregistrée comprend un module de calcul des heures de coucher et de lever du soleil pour chaque jour de l'année, à partir d'un modèle basé sur le mouvement relatif de la terre par rapport au soleil. Le module de traitement met alors en oeuvre le module de calcul pour obtenir les durées préenregistrées.

Dans une variante combinée, la mémoire est préenregistrée sous la forme d'une matrice de correspondance en utilisant un programme de calcul des heures de coucher et de lever du soleil pour chaque jour de l'année, selon le second mode de réalisation.

Dans une réalisation préférée, la mémoire préenregistrée comprend des données relatives à des durées de périodes jour/nuit, comptées par tranches d'intervalles de temps choisis, de préférence voisines de cinq minutes.

Dans une réalisation particulière, le dispositif de commande comporte un module d'interruption générale pour déclencher ou interrompre l'alimentation du circuit utilisateur, aux instants de transition jour/nuit et nuit/jour précités.

Pour des raisons pratiques, il est avantageux que le module de traitement soit alimenté avec le circuit utilisateur, plutôt que prévoir une alimentation autonome du module de traitement.

Avantageusement, le dispositif de commande comporte en outre une mémoire de travail non volatile pour mémoriser au moins la durée calculée par différence des instants de transition.

Préférentiellement, le module de traitement incrémente un compteur de temps dans la mémoire de travail par tranches correspondantes aux intervalles de temps choisis, précités, depuis l'instant de déclenchement jusqu'à l'instant d'interruption de l'alimentation, de sorte que la dernière valeur incrémentée du compteur de temps, avant l'interruption d'alimentation, corresponde à la durée calculée par le module de traitement.

Avantageusement, le module de traitement consulte, après un déclenchement de l'alimentation, la mémoire de travail pour en tirer la durée calculée sensiblement lors de la dernière interruption d'alimentation, ainsi que la mémoire préenregistrée pour comparer cette durée calculée aux durées préenregistrées. Le module de traitement en déduit :
a) le jour civil qui correspond à la dernière durée calculée,
b) de là, le jour civil suivant dans la mémoire préenregistrée (qui correspond alors au jour civil en cours),
c) de là, l'heure civile du coucher ou du lever du soleil du jour en cours, qui correspond sensiblement à l'instant de déclenchement de l'alimentation, et
c) de là, l'heure civile en cours, par consultation et addition de la valeur dernièrement incrémentée du compteur de temps dans la mémoire de travail.

Avantageusement, la mémoire de travail est organisée selon un registre de décalage, avec une valeur sortante à chaque mémorisation d'une valeur entrante. Elle mémorise au moins deux durées successivement calculées et le module de traitement compare les deux durées calculées pour corriger l'estimation du jour civil en cours, notamment suivant que l'on s'approche de l'été avec des nuits plus courte ou que l'on s'approche de l'hiver avec des nuits plus longues.

Selon une autre caractéristique avantageuse, le module de traitement est agencé pour tenir compte, dans l'estimation de l'heure civile en cours, d'une avance d'une heure entre l'hiver et l'été, généralement en usage dans certains pays notamment européens.

Dans une réalisation où le dispositif selon l'invention est destiné en outre à la régulation de l'alimentation électrique du circuit utilisateur, il comporte un module de régulation de l'alimentation électrique de ce circuit, ainsi qu'une interface qui reçoit le signal de commande du module de traitement, cette interface étant reliée au module de régulation pour l'activer ou le désactiver en fonction du signal de commande.

Dans une réalisation particulière, le circuit utilisateur comprend au moins une résistance et le module de régulation comprend au moins une inductance connectée à la résistance pour limiter une puissance d'alimentation de la résistance. L'interface pilote alors un interrupteur monté en parallèle avec l'inductance pour court-circuiter ou non l'inductance en fonction du signal de commande.

Notamment dans une réalisation où le dispositif de commande est destiné à une application dans l'éclairage en grande diffusion, le circuit utilisateur comprend au moins une lampe, telle qu'une lampe de candélabre d'éclairage public.

Dans cette réalisation, les durées ci-avant, calculées et préenregistrées, sont des durées de nuit et l'instant précité de déclenchement de l'alimentation correspond sensiblement au coucher du soleil, tandis que l'instant d'interruption de l'alimentation correspond sensiblement au lever du soleil.

Pour réguler l'alimentation électrique de la lampe du circuit utilisateur, le module de traitement calcule une première durée, sensiblement entre une heure de transition jour/nuit et une première heure fixe, prédéterminée, telle que vingt-deux ou vingt-trois heures. Le module délivre ensuite un signal de commande en vue d'activer le module de régulation après cette première durée. Ainsi, la lampe éclaire en pleine puissance sensiblement entre le coucher du soleil et vingt-deux ou vingt-trois heures, puis elle éclaire à puissance réduite, le cas échéant jusqu'à l'aube, lorsque l'alimentation du circuit utilisateur et du module de traitement est interrompue.

Dans une réalisation plus élaborée, le module de traitement calcule une seconde durée, sensiblement entre la première heure prédéterminée et une seconde heure fixe, prédéterminée. Le module délivre un signal de commande en vue de désactiver le module de régulation après cette seconde durée. Cette seconde durée correspond, dans l'application à la régulation de l'alimentation des candélabres, à une période où une réduction de l'éclairage est requise et s'étend, par exemple, de vingt-deux ou vingt-trois heures à quatre ou cinq heures du lendemain. Ainsi, dans cette réalisation, la lampe éclaire à puissance réduite pendant cette période, puis en pleine puissance de quatre ou cinq heures du matin jusqu'à la transition nuit/jour, lorsque l'alimentation du circuit utilisateur et du module de traitement est interrompue.

D'autres caractéristiques et avantages de l'invention apparaîtront à l'examen de la description détaillée ci-après, et des dessins annexés sur lesquels :
- la figure 1 est un schéma général d'un dispositif selon l'invention, de commande de l'alimentation électrique d'une lampe d'un candélabre d'éclairage public,
- la figure 2 représente plus en détail le module de régulation dans une réalisation particulière,
- les figures 3A, 3B et 3C sont des organigrammes représentant des étapes de fonctionnement du dispositif selon le premier mode de réalisation de l'invention, et
- l'annexe I retranscrit des données dont une partie est destinée à être stockée dans la mémoire préenregistrée, dans le premier mode de réalisation précité.

Les dessins et annexes contiennent, pour l'essentiel, des éléments de caractère certain. Ils pourront donc non seulement servir à mieux faire comprendre la description, mais aussi contribuer à la définition de l'invention, le cas échéant.

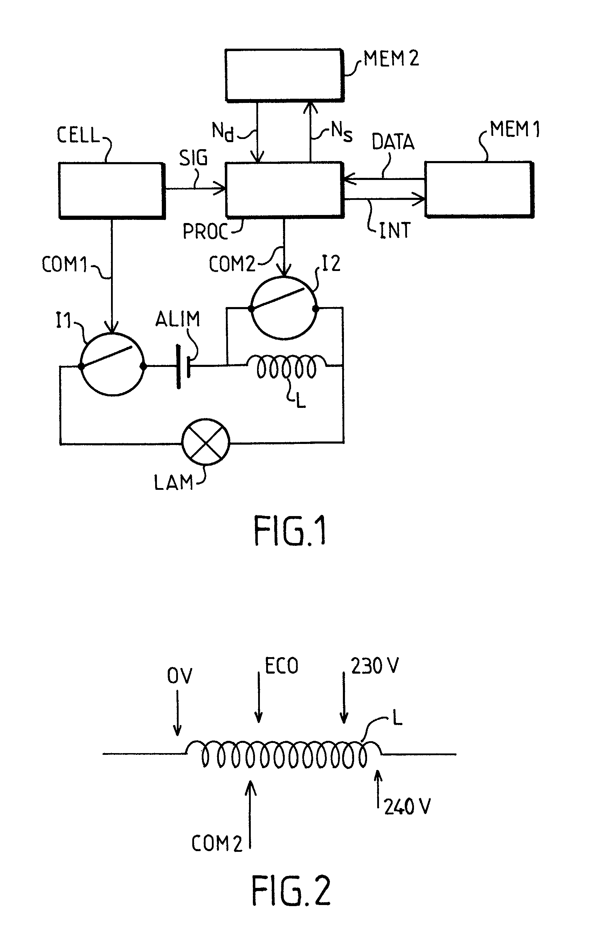

On se réfère tout d'abord à la figure 1 pour décrire un module de commande de l'alimentation électrique d'une lampe d'un candélabre d'éclairage public.

La lampe LAM du candélabre, par exemple à base de sodium et/ou mercure, est alimentée dans l'exemple par une source de tension ALIM. Dans les candélabres d'éclairage public, un premier signal de commande COM1 est généralement délivré pour activer l'alimentation de la lampe LAM. Typiquement, ce premier signal de commande COM1 est issu d'une cellule comprenant une photodiode et montée sur le candélabre, en vue de détecter une diminution de la lumière du jour, par exemple à partir du crépuscule. Dans une variante, le signal COM1 peut être issu d'une horloge astronomique qui donne un angle de la position du soleil par rapport à l'horizon. Généralement, lorsque le soleil est à 4° en dessous de l'horizon (soleil couché) le signal de commande COM1 active l'alimentation de la lampe.

Dans l'exemple représenté sous une forme simplifiée à la figure 1, le candélabre comporte une cellule photosensible CELL qui détecte une diminution, ou encore plus généralement une différence de lumière produite par le soleil, et émet ainsi le signal COM1 pour piloter un interrupteur I1 du circuit d'alimentation de la lampe LAM. En pratique, plusieurs candélabres partagent une même cellule photosensible que comprend un poste de commande central, et comprennent une entrée pour recevoir chacun le signal COM1.

La cellule photosensible CELL permet ainsi de déclencher l'alimentation de la lampe, en dessous d'un seuil prédéterminé de lumière détectée et d'interrompre l'alimentation de la lampe, au-dessus d'un seuil prédéterminé de lumière détectée.

Dans certaines communes urbaines, il est actuellement souhaité de réduire l'intensité de l'éclairage public à partir d'une heure fixe, par exemple à partir de 22 heures ou de 23 heures. L'éclairage public sera alors maximal à partir du crépuscule jusqu'à 22 ou 23 heures, puis réduit, par exemple de 50 %, de 22 heures ou 23 heures jusqu'à l'aube, ou encore jusqu'à 5 ou 6 heures du matin.

Un moyen avantageux pour effectuer cette réduction de l'éclairage consiste à équiper les candélabres d'un ballast comprenant une inductance L, montée en série avec la lampe LAM du candélabre. Une variante de cette réalisation qui prévoit une inductance L consiste à utiliser au moins un transistor de type MOSFET pour activer ou désactiver la régulation de l'alimentation de la lampe LAM.

Une réalisation à base d'inductance réglable a donné des résultats satisfaisants, en particulier pour une temporisation de l'éclairage en pleine puissance, typiquement 4 minutes après le début de l'éclairage (crépuscule). Dans cette réalisation, l'alimentation en tension de la lampe est régulée à 230 volts au début de l'éclairement (amorçage). Il est prévu ensuite une temporisation de 4 minutes pour passer alors à un éclairage en pleine puissance, pour lequel la tension d'alimentation de la lampe est de 240 volts (figure 2).

Si la temporisation de 4 minutes à partir d'un instant du coucher de soleil n'a posé que peu de problèmes de réalisation pour ce type de candélabre, la régulation pour la réduction de l'éclairage à une heure fixe, civile (22 ou 23 heures) pose plus de problèmes. Le circuit utilisateur (alimentation et lampe) doit, d'une part, recevoir une information quant à un instant du crépuscule (donnée par le signal COM1), ainsi qu'une information quant à l'heure fixe de 22 ou 23 heures.

Une solution jusqu'ici envisagée consistait à rajouter à la ligne d'alimentation générale des candélabres, une ligne pilote qui fournirait un signal d'activation de la régulation à partir de 22 ou 23 heures. Cependant, cette réalisation revient à rééquiper les lignes préexistantes de cette ligne pilote, ce qui entraînerait des travaux et des coûts supplémentaires pour les communes intéressées. Par ailleurs, il aurait été nécessaire de remplacer dans les candélabres les systèmes préexistants d'alimentation électrique par des systèmes comprenant une nouvelle entrée pour recevoir le signal de la ligne pilote.

De plus, une réduction différente de lumière dans divers quartiers de la commune peut être souhaitée. Typiquement, pour de grandes artères, la réduction de lumière peut avoir lieu à 23 heures, tandis que pour des quartiers résidentiels, cette réduction de lumière peut avoir lieu à 22 heures. Ainsi, il serait nécessaire de prévoir plusieurs lignes pilotes en fonction des quartiers de la commune où l'on souhaite effectuer la régulation. Une sélectivité entre les différentes régions de la commune apparaîtrait donc difficile à mettre en oeuvre.

Le dispositif de commande selon l'invention permet notamment une gestion autonome de l'éclairage d'un candélabre, pris individuellement.

Globalement, le dispositif de commande comprend une mémoire préenregistrée MEM1 qui comprend des données relatives, dans l'exemple décrit, à une durée de nuit, suivant les différents jours de l'année. En pratique, cette mémoire MEM1 est organisée suivant une matrice des durées de nuit en fonction des jours de l'année. Le dispositif comprend en outre un processeur PROC qui coopère avec une mémoire auxiliaire comprenant des instructions de programmes, formant ainsi le module de traitement précité. Le processeur PROC reçoit un signal SIG représentatif de l'état de la lampe (allumée SIG-A ou éteinte SIG-B). Ainsi, le processeur PROC reçoit une information sur l'instant du début d'éclairage (crépuscule) et une information sur la fin de l'éclairage (aube).

Le processeur PROC pilote, dans l'exemple simple représenté sur la figure 1, un second interrupteur I2 pour court-circuiter ou non l'inductance L. Ainsi, lorsqu'il y a lieu de réduire l'éclairage de la lampe, le processeur PROC délivre un signal de commande COM2 de l'interrupteur I2, en vue d'ouvrir l'interrupteur I2 et ainsi laisser circuler un courant dans l'inductance L. La tension d'alimentation de la lampe LAM chute, selon un mode ECO (figure 2) dans lequel l'éclairage est réduit par exemple de 50 %.

En pratique, la valeur d'inductance du ballast est variable et commandée à la fois pour l'amorce d'éclairage et pour la régulation à heures fixes. En se référant à la figure 2, la tension d'alimentation de la lampe peut varier de 0 jusqu'à 240 volts. En journée, sa tension d'alimentation est nulle, tandis qu'en pleine puissance, sa tension d'alimentation est de 240 volts. Pour son amorçage, la tension d'alimentation est réduite à 230 volts, comme décrit précédemment, tandis que dans le mode ECO, sa tension d'alimentation est choisie pour une réduction d'éclairage de 50 %. Bien entendu, cette valeur de 50 % est donnée ici à titre d'exemple et est susceptible de variante.

Dans le premier mode de réalisation précitée, la régulation s'effectue globalement comme suit.

Le processeur reçoit de la cellule CELL le signal SIG-A qui correspond à l'amorce de la lampe LAM. A partir de l'instant où le processeur reçoit ce signal, il compte, à partir d'une horloge interne qu'il comporte (comprenant typiquement un quartz), des tranches d'un nombre prédéterminé de minutes jusqu'à l'heure fixe à laquelle la réduction d'éclairage est souhaitée. Les données que comporte la mémoire préenregistrée MEM1 servent à estimer la durée entre l'instant du début d'éclairage et l'heure fixe (22 ou 23 heures). Ainsi, le processeur PROC reçoit le signal SIG-A et interroge (liaison INT) la mémoire préenregistrée MEM1 et reçoit en retour des données (liaison DATA) lui permettant d'estimer cette durée. Une fois cette durée écoulée, il émet le signal COM2 pour ouvrir l'interrupteur I2, en vue d'effectuer la réduction d'éclairage après l'heure fixe précitée.

Le fonctionnement décrit ci-avant du dispositif de commande selon l'invention implique que le module de traitement puisse connaître a priori la date du jour ou encore, comme on le verra plus loin, la durée de la nuit à laquelle s'effectue la régulation. Pour les premières mises en service, l'acquisition de cette date s'effectue globalement comme suit.

Le processeur PROC reçoit un premier signal SIG-A correspondant à l'amorçage de l'éclairage de la lampe, ainsi qu'un second signal SIG-B correspondant au désamorçage de la lampe pour son extinction. Ces deux signaux sont reçus respectivement à un instant correspondant au crépuscule et un instant correspondant à l'aube. Entre ces deux instants, le processeur PROC compte par tranches de minutes prédéterminées une durée de nuit et l'enregistre dans une mémoire MEM2 (flèche Ns). La nuit suivante, le processeur, en coopération avec ses différentes mémoires, évalue une seconde durée de nuit qu'il compare à la durée évaluée la nuit précédente. Par différence entre ces deux durées, il déduit une évolution vers les jours d'été ou vers les jours d'hiver dans la matrice selon laquelle est organisée la mémoire préenregistrée MEM1 (voir annexe I).

En pratique, la mémoire MEM2 est organisée selon un registre de décalage acceptant cinq valeurs de durées de nuit de sorte qu'à compter de cinq nuits, une valeur de durée est effacée, tandis qu'une nouvelle valeur de durée de nuit est enregistrée. Le processeur PROC effectue, dans une réalisation préférentielle, une moyenne sur ces cinq valeurs (flèche Nd) et peut ainsi se caler sur la matrice dans la mémoire préenregistrée MEM1.

Dans une réalisation avantageuse, les durées de nuit sont comptées par tranches de 5 minutes, ce qui permet de différencier deux nuits successives dans la matrice.

Sur le tableau représenté dans l'annexe I, la colonne indexée T\5MN définit des adresses qui indiquent des durées de nuit. Typiquement, pour 365 jours dans l'année, il convient de prévoir 183 adresses, soit la moitié du nombre de jours. Dans la dernière colonne indexée DATA, sont mémorisées des durées, par tranches de deux minutes, entre un instant de crépuscule et 22 heures. Ainsi, lorsque le dispositif de commande sera calé correctement sur la matrice de la mémoire MEM1, la précision à laquelle la régulation aura lieu est de l'ordre de 2 minutes. Le tableau représenté sur l'annexe I s'interprète comme suit :
- les troisième et quatrième colonnes de valeurs indiquent les heures et les minutes de coucher du soleil ;
- les cinquième et sixième colonnes de valeurs indiquent les heures et les minutes de lever du soleil ;
- la septième colonne de valeurs indique la durée totale de la nuit en minutes ;
- la huitième colonne de valeurs contient les durées des nuits estimées par tranches de cinq minutes ; cette huitième colonne est enregistrée dans la mémoire MEM1 ;
- la neuvième colonne de valeurs indique les durées entre le crépuscule et 22 heures ; et
- la dixième colonne indique les durées entre l'instant du crépuscule et 22 heures, estimées par tranches de deux minutes ; cette dixième colonne est aussi enregistrée dans la mémoire MEM1.

Ainsi, à chaque adresse de durée de nuit correspondra une durée estimée par tranches de deux minutes entre le coucher du soleil et les 22 heures.

En bref, le module de traitement évalue donc une durée entre un instant de début d'éclairage et un instant de fin d'éclairage, cette durée étant représentative de la durée de la nuit, laquelle correspond à une adresse dans la mémoire MEM1. A cette adresse correspond, dans la mémoire MEM1, une durée par tranches de deux minutes entre le début d'éclairage et les 22 heures. Le module de traitement émet alors le signal COM2 pour commencer la régulation à partir de la fin de cette dernière durée (entre le crépuscule et les 22 heures).

L'acquisition de l'instant de fin d'éclairage (aube) s'effectue préférentiellement comme suit. Après une durée de cinq heures, dans l'exemple décrit, à partir du début de l'éclairage (crépuscule), le processeur enregistre toutes les cinq minutes une valeur de durée dans une mémoire de service, par exemple la mémoire MEM2. Lorsque la cellule CELL interrompt l'alimentation du circuit (à l'aube), la dernière valeur de durée enregistrée dans cette mémoire de service, à laquelle est ajoutée cinq heures, correspond à la durée totale de la nuit. Cette réalisation avantageuse permet d'effectuer un nombre limité d'enregistrements dans la mémoire de service précitée.

Il est à noter en outre qu'avantageusement, le dispositif de commande est alimenté électriquement par l'alimentation générale ALIM. Ainsi, le dispositif de commande ne fonctionne pas durant la journée, ce qui limite sa consommation aux durées de nuit.

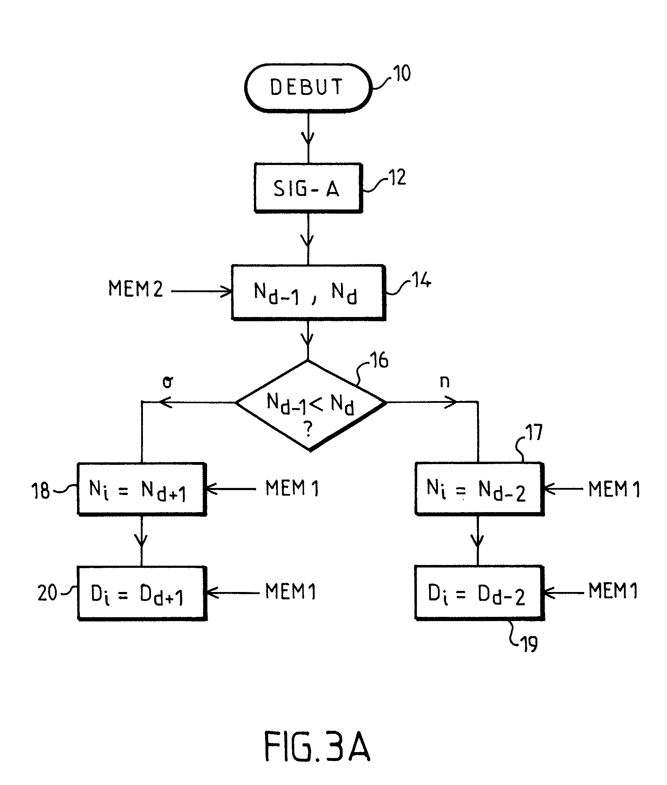

En se référant à la figure 3A, la détermination de l'adresse (durée de nuit N) correspondant à la nuit à laquelle doit être effectuée la régulation, se procède globalement comme suit.

Lorsque la cellule CELL émet le signal de commande COM1 pour le début d'amorçage de la lampe, le processeur reçoit un signal d'activation SIG-A (référence 12 sur la figure 3A) qui définit le début 10 de l'acquisition.

Le processeur interroge à l'étape 14 la mémoire MEM2, dans laquelle sont stockées les valeurs des durées des cinq nuits précédentes. Dans le cas où le dispositif de commande tire l'information du début d'éclairage à partir d'une horloge astronomique, le processeur compare à l'étape 16 la durée de la dernière nuit N_{d} à la durée de la nuit précédent la dernière nuit N_{d-1}. Le résultat de cette comparaison permet, au moins pour les premières mises en service, de déterminer si la nuit sera plus longue (déplacement vers les jours d'hiver) ou plus courte (déplacement vers les jours d'été) que les nuits précédentes.

Si la durée de la dernière nuit est supérieure à celle de la nuit précédente, le processeur prendra l'adresse suivante N_{d+1} dans la matrice stockée dans la mémoire MEM1. Il attribue à l'étape 18 cette adresse à une variable courante Nᵢ, qui correspond à la durée de la nuit en cours. A cette adresse, correspond dans la mémoire MEM1 une durée entre le crépuscule et les 22 heures D_{d+1}. Le processeur attribue à l'étape 20 cette durée à une variable courante Dᵢ entre le crépuscule et les 22 heures, pour la nuit en cours.

Si la durée de la dernière nuit N_{d} est inférieure à la durée de la nuit précédant la dernière nuit N_{d-1}, le processeur attribue à la valeur courante Nᵢ, à l'étape 17, l'adresse qui correspond à deux décalages vers les nuits les plus courtes N_{d-2} dans la mémoire préenregistrée MEM1. Il attribue en outre à l'étape 19 à la variable courante Dᵢ la durée D_{d-2} entre le crépuscule et les 22 heures qui correspond à cette adresse référencée N_{d-2}.

Si la durée de la dernière nuit N_{d} vaut la durée de la nuit précédant la dernière nuit N_{d-1}, il y a lieu de consulter les valeurs précédentes stockées dans la mémoire MEM2, à l'étape 14, ou encore d'attribuer la même durée de nuit N_{d} à la nuit en cours.

Si le signal de commande COM1 est issu d'une cellule photosensible, il est préférentiellement utilisé une moyenne des cinq dernières valeurs de nuits stockées dans la mémoire MEM2, pour déterminer l'adresse dans la mémoire MEM1 qui correspond à la durée de nuit en cours. Il peut être alors prévu de moyenner ces cinq valeurs successivement à chaque acquisition, pour avoir une estimation fine de la durée des nuits précédentes.

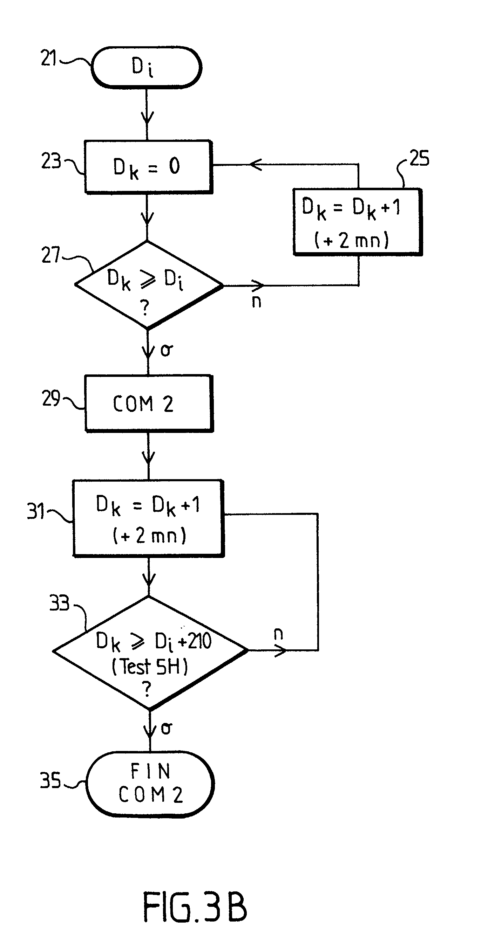

En se référant à la figure 3B, la régulation de l'alimentation électrique de la lampe à 22 heures s'effectue comme suit.

A partir de la durée Dᵢ déterminée à l'une des étapes 19 ou 20, le processeur attribue, à l'étape 23, une valeur nulle à une variable courante Dₖ, laquelle est, à l'étape 25, incrémentée toutes les deux minutes, tant que cette variable courante Dₖ est inférieure à la durée Dᵢ entre le crépuscule et les 22 heures (test à l'étape 27). En pratique, une pause de l'ordre de la seconde est effectuée dans le traitement informatique des données, et un compteur d'horloge permet d'effectuer ce test toutes les deux minutes.

Si à l'étape 27 la valeur incrémentée de Dₖ devient supérieure à la valeur Dᵢ, le signal COM2 est délivré à l'étape 29 pour réduire la puissance d'alimentation de la lampe en utilisant l'inductance L.

Si il est souhaité que cette réduction d'alimentation s'effectue de 22 heures à 5 heures du jour suivant, le processeur incrémente à nouveau, à l'étape 31, la valeur de la durée Dₖ, jusqu'à ce qu'elle atteigne Dᵢ + 210, dans l'exemple représenté sur la figure 3B. Cette valeur de 210 correspond à 7 heures comptées par tranches de deux minutes. Lorsque le test 33 pour atteindre cinq heures du jour suivant est positif, le dispositif de commande désactive la limitation en puissance de la lampe du candélabre (fin de la régulation à l'étape 35). Ainsi, le dispositif commande un éclairage en pleine puissance dès cinq heures du matin.

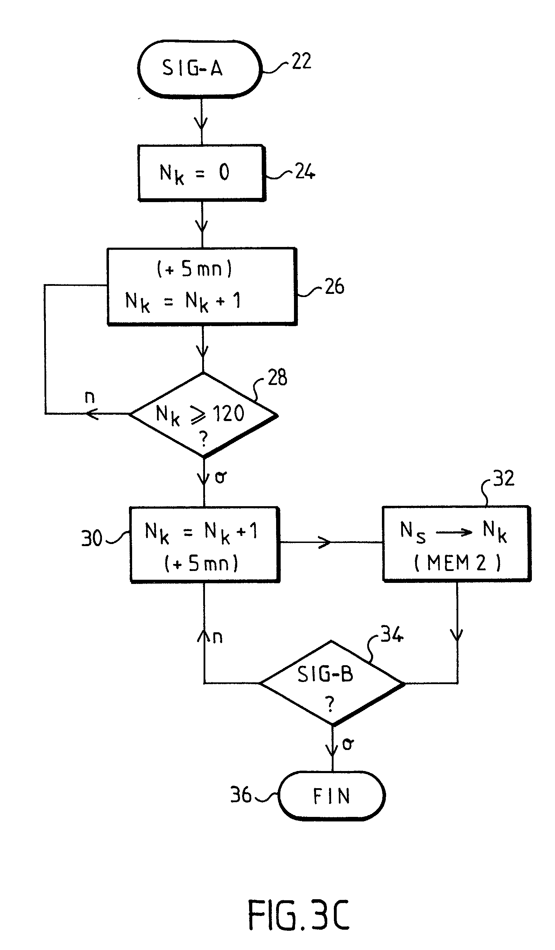

En se référant maintenant à la figure 3C, l'enregistrement de la mémoire MEM2 de la durée de la nuit en cours s'effectue comme suit.

Il est choisi préférentiellement, cinq heures après le début de l'alimentation de la lampe (à partir du signal SIG-A), de commencer l'enregistrement dans la mémoire MEM2 de la durée de la nuit mesurée. Dès réception du signal SIG-A pour l'amorçage de la lampe, le processeur attribue à une valeur courante Nₖ une valeur nulle à l'étape 24, qu'il incrémente, toutes les cinq minutes à l'étape 26. Lorsque la valeur courante Nₖ dépasse 120 (test 28), la valeur de Nₖ est toujours incrémentée toutes les cinq minutes à l'étape 30, mais elle est régulièrement enregistrée dans la mémoire MEM2 à l'étape 32 et, dans un exemple de réalisation, à la même adresse de la mémoire MEM2. Il est à noter que la valeur de 120 correspond à cinq heures comptées par tranches de cinq minutes. La réception du signal SIG-B à l'étape 34 pour l'extinction de la lampe interrompt cette boucle et met fin au décompte à l'étape 36. La dernière valeur stockée dans la mémoire MEM2 correspond ainsi à la durée de la nuit passée Nₛ. Le dispositif de commande, après cette dernière étape, n'est plus alimenté électriquement. Cette durée de la nuit passée Nₛ sera alors consultée le jour suivant pour se caler sur la mémoire MEM1.

En variante de cette réalisation, il peut être prévu d'organiser une seconde zone de la mémoire MEM2 en un registre de décalage, par exemple à cinq valeurs, pour enregistrer par permutation cinq valeurs de Nₛ. La valeur de N_{d} qui sera ensuite prise en compte pour la nuit suivante sera la plus grande parmi les cinq mémorisées.

Après la réception du signal SIG-A à l'étape 22, il est prévu une étape supplémentaire (non représentée) qui consiste à décaler les valeurs des cinq dernières nuits précédentes dans la mémoire MEM2, en libérant une adresse dans laquelle sera enregistrée la valeur de la durée de la nuit en cours Nₛ et un effacement de la valeur de la durée de la cinquième nuit avant la nuit courante. Cette mémoire MEM2 est avantageusement une mémoire de type EEPROM permettant un grand nombre d'écritures et assurant ainsi une durée de vie suffisante au dispositif de commande selon l'invention.

Lorsque le dispositif de commande est implanté dans un candélabre d'éclairage public, pour la première mise en route, un opérateur rentre, via des moyens de saisie prévus dans le dispositif, la longitude de la commune de ce candélabre. Typiquement, entre deux villes d'un même pays longitudinalement éloignées telles que Brest et Strasbourg (en France), un écart de 15 en longitude correspond à environ 1 heure de différence d'éclairement. Si la matrice est initialement programmée pour un éclairage à Brest, il sera alors rajouté, pour une installation à Strasbourg, environ une heure aux durées entre le crépuscule et les 22 heures. Il peut aussi être effectué une correction de ce type en fonction de la latitude, en particulier multiplier par un facteur prédéterminé les valeurs des durées de nuits, ce facteur étant fonction de la latitude.

De même, il peut être décidé que le jour du printemps (le 21 mars), la durée entre le crépuscule et les 22 heures soit réduite d'une heure pour tenir compte d'un changement d'horaire, en usage dans certains pays européens. Dans ce cas, la Demanderesse a prévu un test sur la valeur de l'adresse, pour estimer la durée de la nuit et, en fonction, rajouter ou retrancher une heure pour le décompte entre le crépuscule et les 22 heures.

De même, il est souhaité dans certaines communes que l'éclairage soit régulé plus tard pendant les jours d'été. Par exemple, il peut être souhaité que la régulation s'effectue à partir de 23 heures pour les mois de juin, juillet et août. Dans ce cas, en fonction de l'adresse dans la mémoire préenregistrée, il est rajouté une heure à la durée entre le crépuscule et les 22 heures.

Dans le second mode de réalisation de l'invention précité, la mémoire préenregistrée comporte un programme de calcul, à partir de la deuxième loi de Kepler, pour estimer des instants de coucher de soleil. Le processeur incrémente alors une variable à partir de cet instant jusqu'aux 22 heures, grâce à l'horloge interne qu'il comporte. Bien entendu, dans le premier mode de réalisation précité, la matrice de la mémoire MEM1 peut être enregistrée en fonction du calcul basé sur les lois de Kepler, ou encore à partir des données générales que comprend un éphéméride.

Bien entendu, la présente invention ne se limite pas à la forme de réalisation décrite ci-avant à titre d'exemple. Elle s'étend à d'autres variantes.

Ainsi, le dispositif de commande selon l'invention peut aussi bien s'adapter à un candélabre d'éclairage public qu'à un dispositif d'alimentation électrique pour particuliers. Le dispositif de commande selon l'invention peut typiquement être utilisé pour l'éclairage en grande diffusion, par exemple de vitrines de magasins ou d'usines à activité diurne et nocturne telles que des usines de pétrochimie ou autre. De même, le dispositif selon l'invention trouve une application intéressante dans la commande d'ouverture/fermeture de parkings, de stores notamment dans des serres agricoles, ou de machines domestiques (électroménager ou autre).

Le dispositif de commande selon l'invention permet avantageusement une gestion autonome de chaque candélabre de l'éclairage public. Néanmoins, il peut être aussi utilisé pour un poste de commande générale d'une pluralité de candélabres. Par exemple, si une commune souhaite une régulation de l'éclairage de tous ses candélabres à partir de 22 heures, il peut être prévu d'équiper un poste central d'un dispositif de commande selon l'invention.

Bien entendu, les estimations par tranches de cinq minutes, deux minutes et autres sont décrites ci-avant à titre d'exemples. Si l'on souhaite affiner ces durées, les estimations peuvent se faire selon des tranches de durées plus courtes. Dans ce cas, la matrice stockée dans la mémoire MEM1 comprendra davantage de données. Par ailleurs, pour tenir compte de la latitude, la matrice peut comprendre davantage d'adresses et peut ainsi être implantée à une latitude quelconque sur la terre. Ainsi, certaines adresses ne seront pas utilisées (par exemple des durées de nuit courtes dans des latitudes élevées telles qu'au Nord de l'Europe).

**ANNEXE I**

| **MOIS** | **Jour** | **HEURE** | **MIN** | **HEURE** | **MIN** | **NUIT/M** | **T/5MN** | **A 22H** | **DATA** |
|---|---|---|---|---|---|---|---|---|---|
| JANVIER | 4 | 16 | 52 | 7 | 52 | 900 | 180 | 248 | 124 |
| | 7 | 16 | 56 | 7 | 51 | 895 | 179 | 244 | 122 |
| | 10 | 16 | 59 | 7 | 50 | 891 | 178 | 241 | 120 |
| | 13 | 17 | 3 | 7 | 49 | 886 | 177 | 237 | 118 |
| | 16 | 17 | 7 | 7 | 47 | 880 | 176 | 233 | 116 |
| | 18 | 17 | 10 | 7 | 45 | 875 | 175 | 230 | 115 |
| | 20 | 17 | 13 | 7 | 44 | 871 | 174 | 227 | 114 |
| | 22 | 17 | 16 | 7 | 42 | 866 | 173 | 224 | 112 |
| | 24 | 17 | 19 | 7 | 40 | 861 | 172 | 221 | 110 |
| | 26 | 17 | 22 | 7 | 37 | 855 | 171 | 218 | 109 |
| | 28 | 17 | 25 | 7 | 35 | 850 | 170 | 215 | 108 |
| | 29 | 17 | 27 | 7 | 34 | 847 | 169 | 213 | 106 |
| | 31 | 17 | 30 | 7 | 31 | 841 | 168 | 210 | 105 |
| FEVRIER | 2 | 17 | 33 | 7 | 29 | 836 | 167 | 207 | 104 |
| | 3 | 17 | 35 | 7 | 27 | 832 | 166 | 205 | 102 |
| | 4 | 17 | 37 | 7 | 26 | 829 | 166 | 203 | 102 |
| | 7 | 17 | 41 | 7 | 22 | 821 | 164 | 199 | 100 |
| | 8 | 17 | 43 | 7 | 20 | 817 | 163 | 197 | 98 |
| | 9 | 17 | 45 | 7 | 19 | 814 | 163 | 195 | 98 |
| | 12 | 17 | 49 | 7 | 14 | 805 | 161 | 191 | 96 |
| | 13 | 17 | 51 | 7 | 12 | 801 | 160 | 189 | 94 |
| | 15 | 17 | 54 | 7 | 9 | 795 | 159 | 186 | 93 |
| | 16 | 17 | 56 | 7 | 7 | 791 | 158 | 184 | 92 |
| | 18 | 17 | 59 | 7 | 4 | 785 | 157 | 181 | 90 |
| | 19 | 18 | 1 | 7 | 2 | 781 | 156 | 179 | 90 |
| | 20 | 18 | 2 | 7 | 0 | 778 | 156 | 178 | 89 |
| | 22 | 18 | 5 | 6 | 56 | 771 | 154 | 175 | 88 |
| | 23 | 18 | 7 | 6 | 54 | 767 | 153 | 173 | 86 |
| | 25 | 18 | 10 | 6 | 51 | 761 | 152 | 170 | 85 |
| | 26 | 18 | 12 | 6 | 49 | 757 | 151 | 168 | 84 |
| | 28 | 18 | 15 | 6 | 45 | 750 | 150 | 165 | 82 |
| MARS | 1 | 18 | 16 | 6 | 43 | 747 | 149 | 164 | 82 |
| | 2 | 18 | 18 | 6 | 41 | 743 | 149 | 162 | 81 |
| | 4 | 18 | 21 | 6 | 37 | 736 | 147 | 159 | 80 |
| | 5 | 18 | 23 | 6 | 35 | 732 | 146 | 157 | 78 |
| | 7 | 18 | 26 | 6 | 31 | 725 | 145 | 154 | 77 |
| | 8 | 18 | 27 | 6 | 29 | 722 | 144 | 153 | 76 |
| | 10 | 18 | 30 | 6 | 25 | 715 | 143 | 150 | 75 |
| | 11 | 18 | 32 | 6 | 23 | 711 | 142 | 148 | 74 |
| | 12 | 18 | 33 | 6 | 21 | 708 | 142 | 147 | 74 |
| | 14 | 18 | 36 | 6 | 17 | 701 | 140 | 144 | 72 |
| | 15 | 18 | 38 | 6 | 15 | 697 | 139 | 142 | 71 |
| | 17 | 18 | 41 | 6 | 11 | 690 | 138 | 139 | 70 |
| | 18 | 18 | 42 | 6 | 9 | 687 | 137 | 138 | 69 |
| | 20 | 18 | 45 | 6 | 5 | 680 | 136 | 135 | 68 |

| | | | | | | | | | |
|---|---|---|---|---|---|---|---|---|---|
| **PRINTEMPS** | 21 | 18 | 47 | 6 | 3 | 676 | 135 | 133 | 66 |
| | 22 | 18 | 48 | 6 | 1 | 673 | 135 | 132 | 66 |
| | 24 | 18 | 51 | 5 | 56 | 665 | 133 | 129 | 64 |
| | 25 | 18 | 53 | 5 | 54 | 661 | 132 | 127 | 64 |
| | 26 | 18 | 54 | 5 | 52 | 658 | 132 | 126 | 63 |
| | 28 | 18 | 57 | 5 | 48 | 651 | 130 | 123 | 62 |
| | 29 | 18 | 59 | 5 | 46 | 647 | 129 | 121 | 60 |
| | 31 | 19 | 1 | 5 | 42 | 641 | 128 | 119 | 60 |
| AVRIL | 1 | 19 | 3 | 5 | 40 | 637 | 127 | 117 | 58 |
| | 3 | 19 | 6 | 5 | 36 | 630 | 126 | 114 | 57 |
| | 4 | 19 | 7 | 5 | 34 | 627 | 125 | 113 | 56 |
| | 6 | 19 | 10 | 5 | 30 | 620 | 124 | 110 | 55 |
| | 7 | 19 | 12 | 5 | 28 | 616 | 123 | 108 | 54 |
| | 8 | 19 | 13 | 5 | 26 | 613 | 123 | 107 | 54 |
| | 11 | 19 | 18 | 5 | 20 | 602 | 120 | 102 | 51 |
| | 13 | 19 | 20 | 5 | 16 | 596 | 119 | 100 | 50 |
| | 14 | 19 | 22 | 5 | 14 | 592 | 118 | 98 | 49 |
| | 16 | 19 | 25 | 5 | 10 | 585 | 117 | 95 | 48 |
| | 17 | 19 | 26 | 5 | 8 | 582 | 116 | 94 | 47 |
| | 19 | 19 | 29 | 5 | 4 | 575 | 115 | 91 | 46 |
| | 20 | 19 | 31 | 5 | 2 | 571 | 114 | 89 | 44 |
| | 22 | 19 | 34 | 4 | 59 | 565 | 113 | 86 | 43 |
| | 23 | 19 | 35 | 4 | 57 | 562 | 112 | 85 | 42 |
| | 25 | 19 | 38 | 4 | 53 | 555 | 111 | 82 | 41 |
| | 26 | 19 | 39 | 4 | 51 | 552 | 110 | 81 | 40 |
| | 28 | 19 | 42 | 4 | 48 | 546 | 109 | 78 | 39 |
| | 29 | 19 | 44 | 4 | 46 | 542 | 108 | 76 | 38 |
| MAI | 1 | 19 | 47 | 4 | 43 | 536 | 107 | 73 | 36 |
| | 3 | 19 | 49 | 4 | 39 | 530 | 106 | 71 | 36 |
| | 4 | 19 | 51 | 4 | 38 | 527 | 105 | 69 | 34 |
| | 6 | 19 | 54 | 4 | 35 | 521 | 104 | 66 | 33 |
| | 8 | 19 | 57 | 4 | 32 | 515 | 103 | 63 | 32 |
| | 10 | 19 | 59 | 4 | 29 | 510 | 102 | 61 | 30 |
| | 11 | 20 | 1 | 4 | 27 | 506 | 101 | 59 | 30 |
| | 13 | 20 | 3 | 4 | 24 | 501 | 100 | 57 | 28 |
| | 15 | 20 | 6 | 4 | 22 | 496 | 99 | 54 | 27 |
| | 17 | 20 | 9 | 4 | 19 | 490 | 98 | 51 | 26 |
| | 19 | 20 | 11 | 4 | 17 | 486 | 97 | 49 | 24 |
| | 21 | 20 | 14 | 4 | 15 | 481 | 96 | 46 | 23 |
| | 23 | 20 | 16 | 4 | 12 | 476 | 95 | 44 | 22 |
| | 25 | 20 | 18 | 4 | 10 | 472 | 94 | 42 | 21 |
| | 28 | 20 | 22 | 4 | 8 | 466 | 93 | 38 | 19 |
| | 31 | 20 | 25 | 4 | 5 | 460 | 92 | 35 | 18 |
| JUIN | 3 | 20 | 28 | 4 | 3 | 455 | 91 | 32 | 16 |
| | 7 | 20 | 31 | 4 | 1 | 450 | 90 | 29 | 14 |

| | | | | | | | | | |
|---|---|---|---|---|---|---|---|---|---|
| | 12 | 20 | 35 | 4 | 0 | 445 | 89 | 25 | 12 |
| **ETE** | 21 | 20 | 38 | 4 | 0 | 442 | 88 | 22 | 11 |
| JUILLET | 1 | 20 | 38 | 4 | 4 | 446 | 89 | 22 | 11 |
| | 5 | 20 | 37 | 4 | 7 | 450 | 90 | 23 | 12 |
| | 9 | 20 | 35 | 4 | 10 | 455 | 91 | 25 | 12 |
| | 12 | 20 | 33 | 4 | 13 | 460 | 92 | 27 | 14 |
| | 15 | 20 | 31 | 4 | 16 | 465 | 93 | 29 | 14 |
| | 18 | 20 | 28 | 4 | 19 | 471 | 94 | 32 | 16 |
| | 20 | 20 | 26 | 4 | 21 | 475 | 95 | 34 | 17 |
| | 23 | 20 | 23 | 4 | 25 | 482 | 96 | 37 | 18 |
| | 25 | 20 | 21 | 4 | 27 | 486 | 97 | 39 | 20 |
| | 27 | 20 | 18 | 4 | 29 | 491 | 98 | 42 | 21 |
| | 29 | 20 | 16 | 4 | 32 | 496 | 99 | 44 | 22 |
| | 31 | 20 | 13 | 4 | 35 | 502 | 100 | 47 | 24 |
| AOUT | 2 | 20 | 10 | 4 | 37 | 507 | 101 | 50 | 25 |
| | 4 | 20 | 7 | 4 | 40 | 513 | 103 | 53 | 26 |
| | 5 | 20 | 6 | 4 | 41 | 515 | 103 | 54 | 27 |
| | 7 | 20 | 3 | 4 | 44 | 521 | 104 | 57 | 28 |
| | 9 | 19 | 59 | 4 | 46 | 527 | 105 | 61 | 30 |
| | 10 | 19 | 58 | 4 | 48 | 530 | 106 | 62 | 31 |
| | 12 | 19 | 54 | 4 | 51 | 537 | 107 | 66 | 33 |
| | 14 | 19 | 51 | 4 | 53 | 542 | 108 | 69 | 34 |
| | 15 | 19 | 49 | 4 | 55 | 546 | 109 | 71 | 36 |
| | 17 | 19 | 46 | 4 | 57 | 551 | 110 | 74 | 37 |
| | 18 | 19 | 44 | 4 | 59 | 555 | 111 | 76 | 38 |
| | 20 | 19 | 40 | 5 | 2 | 562 | 112 | 80 | 40 |
| | 21 | 19 | 38 | 5 | 3 | 565 | 113 | 82 | 41 |
| | 23 | 19 | 34 | 5 | 6 | 572 | 114 | 86 | 43 |
| | 25 | 19 | 31 | 5 | 8 | 577 | 115 | 89 | 44 |
| | 26 | 19 | 29 | 5 | 10 | 581 | 116 | 91 | 46 |
| | 28 | 19 | 25 | 5 | 13 | 588 | 118 | 95 | 48 |
| | 29 | 19 | 23 | 5 | 14 | 591 | 118 | 97 | 48 |
| | 31 | 19 | 19 | 5 | 17 | 598 | 120 | 101 | 50 |
| SEPTEMBRE | 1 | 19 | 17 | 5 | 18 | 601 | 120 | 103 | 52 |
| | 2 | 19 | 15 | 5 | 20 | 605 | 121 | 105 | 52 |
| | 4 | 19 | 11 | 5 | 22 | 611 | 122 | 109 | 54 |
| | 5 | 19 | 9 | 5 | 24 | 615 | 123 | 111 | 56 |
| | 7 | 19 | 5 | 5 | 26 | 621 | 124 | 115 | 58 |
| | 8 | 19 | 3 | 5 | 28 | 625 | 125 | 117 | 58 |
| | 10 | 18 | 58 | 5 | 31 | 633 | 127 | 122 | 61 |
| | 11 | 18 | 56 | 5 | 32 | 636 | 127 | 124 | 62 |
| | 13 | 18 | 52 | 5 | 35 | 643 | 129 | 128 | 64 |
| | 14 | 18 | 50 | 5 | 36 | 646 | 129 | 130 | 65 |
| | 15 | 18 | 48 | 5 | 38 | 650 | 130 | 132 | 66 |
| | 17 | 18 | 44 | 5 | 40 | 656 | 131 | 136 | 68 |
| | 18 | 18 | 42 | 5 | 42 | 660 | 132 | 138 | 69 |
| | 20 | 18 | 37 | 5 | 45 | 668 | 134 | 143 | 72 |

| | | | | | | | | | |
|---|---|---|---|---|---|---|---|---|---|
| | 21 | 18 | 35 | 5 | 46 | 671 | 134 | 145 | 72 |
| **AUTOMNE** | 23 | 18 | 31 | 5 | 49 | 678 | 136 | 149 | 74 |
| | 24 | 18 | 29 | 5 | 50 | 681 | 136 | 151 | 76 |
| | 25 | 18 | 27 | 5 | 52 | 685 | 137 | 153 | 76 |
| | 27 | 18 | 23 | 5 | 54 | 691 | 138 | 157 | 78 |
| | 28 | 18 | 21 | 5 | 56 | 695 | 139 | 159 | 80 |
| | 30 | 18 | 17 | 5 | 59 | 702 | 140 | 163 | 82 |
| OCTOBRE | 1 | 18 | 15 | 6 | 0 | 705 | 141 | 165 | 82 |
| | 3 | 18 | 10 | 6 | 3 | 713 | 143 | 170 | 85 |
| | 4 | 18 | 8 | 6 | 4 | 716 | 143 | 172 | 86 |
| | 5 | 18 | 6 | 6 | 6 | 720 | 144 | 174 | 87 |
| | 7 | 18 | 2 | 6 | 9 | 727 | 145 | 178 | 89 |
| | 8 | 18 | 0 | 6 | 10 | 730 | 146 | 180 | 90 |
| | 10 | 17 | 56 | 6 | 13 | 737 | 147 | 184 | 92 |
| | 11 | 17 | 54 | 6 | 15 | 741 | 148 | 186 | 93 |
| | 13 | 17 | 50 | 6 | 17 | 747 | 149 | 190 | 95 |
| | 14 | 17 | 48 | 6 | 19 | 751 | 150 | 192 | 96 |
| | 16 | 17 | 44 | 6 | 22 | 758 | 152 | 196 | 98 |
| | 17 | 17 | 43 | 6 | 23 | 760 | 152 | 197 | 98 |
| | 19 | 17 | 39 | 6 | 26 | 767 | 153 | 201 | 100 |
| | 20 | 17 | 37 | 6 | 28 | 771 | 154 | 203 | 102 |
| | 22 | 17 | 33 | 6 | 31 | 778 | 156 | 207 | 104 |
| | 23 | 17 | 31 | 6 | 33 | 782 | 156 | 209 | 104 |
| | 25 | 17 | 28 | 6 | 36 | 788 | 158 | 212 | 106 |
| | 26 | 17 | 26 | 6 | 37 | 791 | 158 | 214 | 107 |
| | 27 | 17 | 24 | 6 | 39 | 795 | 159 | 216 | 108 |
| | 29 | 17 | 21 | 6 | 42 | 801 | 160 | 219 | 110 |
| | 31 | 17 | 18 | 6 | 45 | 807 | 161 | 222 | 111 |
| NOVEMBRE | 2 | 17 | 14 | 6 | 48 | 814 | 163 | 226 | 113 |
| | 3 | 17 | 13 | 6 | 50 | 817 | 163 | 227 | 114 |
| | 4 | 17 | 11 | 6 | 51 | 820 | 164 | 229 | 114 |
| | 6 | 17 | 8 | 6 | 54 | 826 | 165 | 232 | 116 |
| | 8 | 17 | 5 | 6 | 57 | 832 | 166 | 235 | 118 |
| | 9 | 17 | 4 | 6 | 59 | 835 | 167 | 236 | 118 |
| | 11 | 17 | 1 | 7 | 2 | 841 | 168 | 239 | 120 |
| | 13 | 16 | 59 | 7 | 5 | 846 | 169 | 241 | 120 |
| | 14 | 16 | 57 | 7 | 7 | 850 | 170 | 243 | 122 |
| | 16 | 16 | 55 | 7 | 10 | 855 | 171 | 245 | 122 |
| | 18 | 16 | 53 | 7 | 13 | 860 | 172 | 247 | 124 |
| | 20 | 16 | 51 | 7 | 16 | 865 | 173 | 249 | 124 |
| | 22 | 16 | 49 | 7 | 19 | 870 | 174 | 251 | 126 |
| | 25 | 16 | 46 | 7 | 23 | 877 | 175 | 254 | 127 |
| | 27 | 16 | 45 | 7 | 26 | 881 | 176 | 255 | 128 |
| | 29 | 16 | 43 | 7 | 28 | 885 | 177 | 257 | 128 |
| DECEMBRE | 2 | 16 | 42 | 7 | 32 | 890 | 178 | 258 | 129 |
| | 5 | 16 | 40 | 7 | 36 | 896 | 179 | 260 | 130 |

| | | | | | | | | | |
|---|---|---|---|---|---|---|---|---|---|
| | 9 | 16 | 39 | 7 | 40 | 901 | 180 | 261 | 130 |
| **HIVER** | 21 | 16 | 41 | 7 | 49 | 908 | 182 | 259 | 130 |
| | 31 | 16 | 48 | 7 | 52 | 904 | 181 | 252 | 126 |

## Revendications

1. Dispositif de commande d'une alimentation électrique, notamment pour un éclairage en grande diffusion, comprenant un module de traitement (PROC) muni d'une entrée pour recevoir des indications (SIG) d'instants de transition jour/nuit et nuit/jour, et agencé pour mettre en forme, à partir desdites indications, un signal de commande (COM2) de l'alimentation électrique (I2,L,ALIM) d'un circuit utilisateur (LAM),
**caractérisé en qu'**il comporte en outre une mémoire préenregistrée (MEM1) dans laquelle sont stockées des données relatives (N_{d},D_{d}) à des heures civiles de lever et/ou de coucher du soleil, ainsi que des données de durées liées aux périodes jour/nuit, pour une partie au moins des jours de l'année,
et en ce que le module de traitement (PROC) est agencé en outre pour :
a) calculer, à l'aide d'une base de temps, une durée par différence des instants de transition (Nₛ),
b) consulter la mémoire préenregistrée (MEM1) en vue de comparer la durée calculée aux durées préenregistrées, et
c) déduire de cette comparaison une estimation de l'heure civile,
ce qui permet de commander l'alimentation sensiblement en fonction de l'heure civile en cours.

2. Dispositif selon la revendication 1, **caractérisé en ce que** la mémoire préenregistrée (MEM1) comprend en outre des données relatives à une position géographique du circuit utilisateur, et **en ce que** le module de traitement (PROC) est agencé pour corriger l'estimation de l'heure civile en tenant compte de ladite position géographique.

3. Dispositif selon l'une des revendications 1 et 2, **caractérisé en ce que** la mémoire préenregistrée (MEM1) est organisée en une matrice de correspondance des données avec des jours de l'année.

4. Dispositif selon l'une des revendications 1 et 2, **caractérisé en ce que** la mémoire préenregistrée (MEM1) comprend un module de calcul des heures de coucher et de lever du soleil pour chaque jour de l'année, à partir d'un modèle basé sur le mouvement relatif de la terre par rapport au soleil, et **en ce que** le module de traitement est apte à coopérer avec la mémoire préenregistrée pour mettre en oeuvre le module de calcul et en obtenir lesdites durées préenregistrées.

5. Dispositif selon l'une des revendications précédentes, **caractérisé en ce que** la mémoire préenregistrée comprend des données relatives à des durées de périodes jour/nuit (N_{d}), comptées par tranches d'intervalles de temps choisis, de préférence voisines de cinq minutes.

6. Dispositif selon l'une des revendications précédentes, **caractérisé en ce qu'**il comporte en outre un module d'interruption générale (I1) propre à déclencher ou interrompre l'alimentation du circuit utilisateur (LAM), ainsi que l'alimentation du module de traitement (PROC), aux instants de transition jour/nuit et nuit/jour, et **en ce que** le dispositif de commande comporte en outre une mémoire de travail non volatile (MEM2), agencée pour coopérer avec le module de traitement pour mémoriser au moins ladite durée calculée par différence des instants de transition.

7. Dispositif selon la revendication 6, prise en combinaison avec la revendication 5, **caractérisé en ce que** le module de traitement est agencé pour incrémenter un compteur de temps (Nₖ) dans la mémoire de travail par tranches correspondantes auxdits intervalles de temps choisis, depuis l'instant de déclenchement jusqu'à l'instant d'interruption de l'alimentation, de sorte que la dernière valeur incrémentée du compteur de temps, avant l'interruption d'alimentation, correspond à ladite durée calculée (Nₛ).

8. Dispositif selon la revendication 7, **caractérisé en ce que** le module de traitement est agencé pour consulter, après un déclenchement de l'alimentation, la mémoire de travail (MEM2) pour en tirer la durée calculée (Nₛ) sensiblement lors de la dernière interruption d'alimentation, ainsi que la mémoire préenregistrée (MEM1) pour comparer cette durée calculée aux durées préenregistrées (N_{d}) et en déduire l'heure civile du coucher ou du lever du soleil qui correspond sensiblement à l'instant de déclenchement de l'alimentation, et l'heure civile en cours, par consultation et addition de la valeur dernièrement incrémentée du compteur de temps dans la mémoire de travail.

9. Dispositif selon la revendication 8, **caractérisé en ce que** la mémoire de travail (MEM2) est organisée selon un registre de décalage, avec une valeur sortante à chaque mémorisation d'une valeur entrante (Nₛ), **en ce que** la mémoire de travail (MEM2) est agencée pour mémoriser au moins deux durées successivement calculées, et **en ce que** le module de traitement est agencé pour comparer les deux durées calculées pour corriger l'estimation du jour civil en cours.

10. Dispositif selon la revendication 9, **caractérisé en ce que** le module de calcul est agencé pour tenir compte, dans l'estimation de l'heure civile, d'une avance d'une heure entre l'hive et l'été.

11. Dispositif selon l'une des revendications précédentes, **caractérisé en ce qu'**il est agencé pour réguler l'alimentation électrique du circuit utilisateur, et **en ce qu'**il comporte un module de régulation (L) de l'alimentation électrique (ALIM) du circuit utilisateur (LAM), ainsi qu'une interface (I2) propre à recevoir le signal de commande (COM2) et reliée au module de régulation (L) pour activer ou désactiver le module de régulation en fonction du signal de commande.

12. Dispositif selon la revendication 11, **caractérisé en ce que** le circuit utilisateur comprend au moins une résistance (LAM), **en ce que** le module de régulation comprend au moins une inductance (L) connectée à la résistance pour limiter une puissance d'alimentation de la résistance, et **en ce que** l'interface comprend un interrupteur (12) monté en parallèle avec l'inductance (L), en vue de court-circuiter ou non l'inductance en fonction du signal de commande.

13. Dispositif selon l'une des revendication précédentes, **caractérisé en ce que** le circuit utilisateur comprend au moins une lampe (LAM), notamment d'un candélabre d'éclairage public.

14. Dispositif selon l'une des revendications 11 et 12, prises en combinaison avec la revendication 13, **caractérisé en ce que** lesdites durées calculées et préenregistrées sont des durées de nuit, et **en ce que** le module de traitement est agencé pour calculer une première durée (Dᵢ), sensiblement entre une heure de transition jour/nuit et une première heure fixe, prédéterminée, et pour délivrer un signal de commande (COM2) en vue d'activer le module de régulation après la première durée (Dᵢ).

15. Dispositif selon la revendication 14, **caractérisé en ce que** le module de traitement est agencé pour calculer en outre une seconde durée (Dᵢ+120), sensiblement entre la première heure prédéterminée et une seconde heure fixe, prédéterminée, et pour délivrer un signal de commande en vue de désactiver le module de régulation après ladite seconde durée (Dᵢ+120).
